(19) Europäisches Patentamt
European Patent Office
Office européen des brevets

(11) **EP 4 546 030 A1**

(12) **EUROPEAN PATENT APPLICATION**

(43) Date of publication:
**30.04.2025 Bulletin 2025/18**

(21) Application number: **24200733.4**

(22) Date of filing: **17.09.2024**

(51) International Patent Classification (IPC):
**G02B 26/10** (2006.01)    **G02B 27/10** (2006.01)
**G02B 26/12** (2006.01)    G02B 27/14 (2006.01)

(52) Cooperative Patent Classification (CPC):
**G02B 26/10; G02B 26/123; G02B 26/127;
G02B 27/10;** G02B 27/143

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.10.2023 GB 202316314**

(71) Applicant: **Nokia Technologies Oy
02610 Espoo (FI)**

(72) Inventor: **SAMANTA, Bibek
Dunellen, NJ (US)**

(74) Representative: **Nokia EPO representatives
Nokia Technologies Oy
Karakaari 7
02610 Espoo (FI)**

(54) **AN APPARATUS, METHOD AND COMPUTER PROGRAM**

(57)    An apparatus comprising: a detector for detecting light output from a plurality of scanning lasers; means for controlling respective lengths of light paths from the plurality of scanning lasers to the detector such that the respective lengths of the light paths are first lengths at a first time and second lengths, different to the first lengths, at a second time; and means for adjusting at least one light path orientation to obtain coincidence of the light output from the plurality of scanning lasers at the detector at the first time and at the second time.

FIG. 2

EP 4 546 030 A1

**Description**

TECHNOLOGICAL FIELD

Examples of the disclosure relate to an apparatus, method and computer program. Some relate to an apparatus, method and computer program for obtaining coincidence of light output from a plurality of scanning lasers.

BACKGROUND

Sensors and devices are available which simultaneously scan more than one laser beam to perform sensing, mapping, composition analysis, multiplexed ranging tasks, and other tasks.

Accurate control and/or alignment of the laser beams improves the performance of such devices.

BRIEF SUMMARY

According to various, but not necessarily all, examples there is provided an apparatus comprising: a detector for detecting light output from a plurality of scanning lasers; means for controlling respective lengths of light paths from the plurality of scanning lasers to the detector such that the respective lengths of the light paths are first lengths at a first time and second lengths, different to the first lengths, at a second time; and means for adjusting at least one light path orientation to obtain coincidence of the light output from the plurality of scanning lasers at the detector at the first time and at the second time.

In some but not necessarily all examples, the first time is a first period of time and wherein the second time is a second period of time.

In some but not necessarily all examples, the means for controlling the respective lengths of the light paths comprise a light guide configured for the variation of optical path length.

In some but not necessarily all examples, the light guide is configured for rectilinear light input and rectilinear light output.

In some but not necessarily all examples, controlling the respective lengths of the light paths comprises changing the orientation of the light guide.

In some but not necessarily all examples, changing the orientation of the light guide comprises rotating the light guide to change an angle of incidence of the light output from the plurality of scanning lasers on the light guide.

In some but not necessarily all examples, the means for adjusting the at least one light path orientation comprise means for adjusting an orientation of at least one laser of the plurality of scanning lasers.

In some but not necessarily all examples, the means for adjusting the at least one light path orientation comprise means for redirecting the at least one light path.

In some but not necessarily all examples, the detector has a fixed position relative to the apparatus.

In some but not necessarily all examples, the apparatus comprises the plurality of scanning lasers.

In some but not necessarily all examples, the apparatus comprises an optical arrangement configured to direct a portion of the light emitted by the plurality of scanning lasers towards the means for controlling the respective lengths of the light paths.

In some but not necessarily all examples, the means for adjusting the at least one light path orientation are configured to obtain coincidence, at the detector, between light output from a first laser of the plurality of lasers and light output from a second laser of the plurality of lasers.

In some but not necessarily all examples, the means for adjusting the at least one light path orientation are configured to obtain coincidence, at the detector, between the light output from the first laser and light output from a further laser of the plurality of lasers, based at least in part on a determination that coincidence between the first laser and the second laser has been obtained.

In some but not necessarily all examples, the light output from a subset of the plurality of scanning lasers is emitted from a shared aperture at the first time and at the second time.

In some but not necessarily all examples, the apparatus comprises means for determining if the light output from the first laser and the light output from the second laser are coincident, at the first time, at the detector.

In some but not necessarily all examples, the apparatus comprises means for, in dependence upon a determination that the light output from the first laser is not coincident, at the first time, with the light output from the second laser at the detector, adjusting a light path orientation of light from the second laser to obtain coincidence, at the first time, of the light output from the first laser and the second laser at the detector.

In some but not necessarily all examples, the apparatus comprises means for, in dependence upon a determination that the light output from the first laser is coincident, at the first time, with the light output from the second laser at the detector, determining if the light output from the first laser is coincident, at the second time, with the light output from the second laser at the detector.

In some but not necessarily all examples, light output from at least some of the plurality of scanning lasers is emitted from respective apertures.

In some but not necessarily all examples, the apparatus comprises means for validating an analytic transfer function at the first time and at the second time, wherein validating the analytic transfer function comprises: determining, using the analytic transfer function, a first light path orientation of the light output from the first laser such that, when the light output from the first laser has the first light path orientation at the first time, the light output from the first laser coincides at the detector with the light output from the second laser; adjusting the light path orientation of the light output from the first laser to the first light path orientation; determining if there is coincidence, at the detector, of the light output from the first laser and the light output from the second laser at the first time; determining, using the analytic transfer function, a second light path orientation of the light from the first laser such that, when the light output from the first laser has the second light path orientation at the second time, the light output from the first laser coincides at the detector with the light output from the second laser; adjusting the light path orientation of the light output from the first laser to the second light path orientation; and determining if there is coincidence, at the detector, of the light output from the first laser and the light output from the second laser at the second time.

In some but not necessarily all examples, the apparatus comprises means for determining the analytic transfer function, wherein determining the analytic transfer function comprises: creating a first array of detector positions; and determining a polynomial analytic transfer function to fit the first array.

In some but not necessarily all examples, the means for determining the analytic transfer function are configured to update the analytic transfer function, based at least in part on a determination that there is not coincidence of the light from the first laser and the light from the second laser at either the first time or the second time.

In some but not necessarily all examples, updating the analytic transfer function comprises: creating a second array of detector positions, the second array comprising more detector positions than the first array; and determining a polynomial analytic transfer function to fit the second array.

According to various, but not necessarily all, examples there is provided a method comprising: detecting light output from a plurality of scanning lasers; controlling respective lengths of light paths from the plurality of scanning lasers to the detector such that the respective lengths of the light paths are first lengths at a first time and second lengths, different to the first lengths, at a second time; and adjusting at least one light path orientation to obtain coincidence of the light output from the plurality of scanning lasers at the detector at the first time and at the second time.

According to various, but not necessarily all, examples there is provided a computer program comprising program instructions for causing an apparatus to perform at least the following: detecting light output from a plurality of scanning lasers; controlling respective lengths of light paths from the plurality of scanning lasers to the detector such that the respective lengths of the light paths are first lengths at a first time and second lengths, different to the first lengths, at a second time; and adjusting at least one light path orientation to obtain coincidence of the light output from the plurality of scanning lasers at the detector at the first time and at the second time.

According to various, but not necessarily all, examples there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

BRIEF DESCRIPTION

Some examples will now be described with reference to the accompanying drawings in which:

FIG. 1 illustrates an example of the subject-matter disclosed herein;
FIG. 2 illustrates a further example of the subject-matter disclosed herein;
FIGs 3A - 3D illustrate further examples of the subject-matter disclosed herein;
FIGs 4A - 4B illustrate further examples of the subject-matter disclosed herein;
FIGs 5A - 5F illustrate further examples of the subject-matter disclosed herein;
FIG. 6 illustrates a further example of the subject-matter disclosed herein;
FIG. 7 illustrates a further example of the subject-matter disclosed herein;
FIG. 8 illustrates a further example of the subject-matter disclosed herein;
FIG. 9 illustrates a further example of the subject-matter disclosed herein;
FIG. 10 illustrates a further example of the subject-matter disclosed herein;
FIG. 11 illustrates a further example of the subject-matter disclosed herein;
FIG. 12 illustrates a further example of the subject-matter disclosed herein;
FIG. 13 illustrates a further example of the subject-matter disclosed herein;
FIG. 14 illustrates a further example of the subject-matter disclosed herein; and
FIG. 15 illustrates a further example of the subject-matter disclosed herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

DETAILED DESCRIPTION

The following description and the enclosed FIGs relate to various examples of an apparatus 100 comprising a detector 102 for detecting light output from a plurality of scanning lasers; means 104 for controlling respective lengths of light paths from the plurality of scanning lasers to the detector 102 such that the respective lengths of the light paths are first lengths at a first time and second lengths, different to the first lengths, at a second time; and means 106 for adjusting at least one light path orientation to obtain coincidence of the light output from the plurality of scanning lasers 202 at the detector 102 at the first time and at the second time.

The following description and the enclosed FIGs therefore relate to various examples of an apparatus 100 comprising a detector 102 for detecting light output from a plurality of scanning lasers 202; means 104 for controlling respective lengths of light paths from the plurality of scanning lasers 202 to the detector 102 such that the respective lengths of the light paths are first lengths at a first time and second lengths, different to the first lengths, at a second time; and means 106 for adjusting at least one light path orientation to obtain coincidence of the light output from the plurality of scanning lasers 202 at the detector 102 when the respective lengths of the light paths are the first lengths and when the respective lengths of the light paths are the second lengths.

In examples, coincidence of the light output from the plurality of scanning lasers 202 at the detector 102 is both temporal and spatial, that is, in order to be coincident, the light output from the plurality of scanning lasers 202 is incident on the same point at the same time. Thus, in some examples, the detector is configured for simultaneously detecting the light output from the plurality of scanning lasers.

In examples, coincidence of the light output from the plurality of scanning lasers 202 at the detector 102 is spatial only, that is, in order to be coincident, the light output from the plurality of scanning lasers 202 is incident on the same point, but not necessarily at the same time.

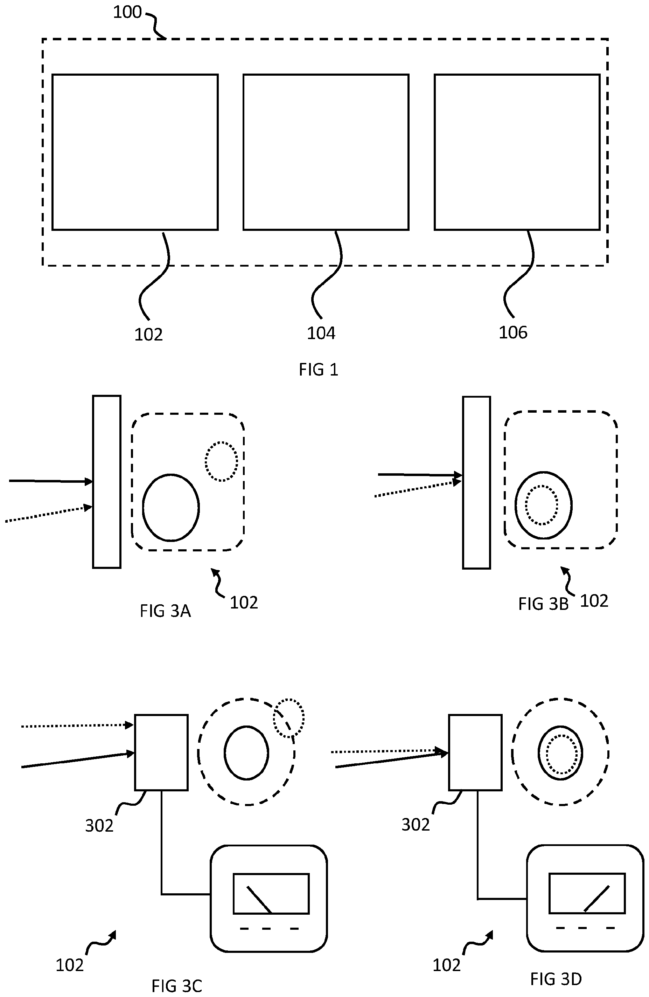

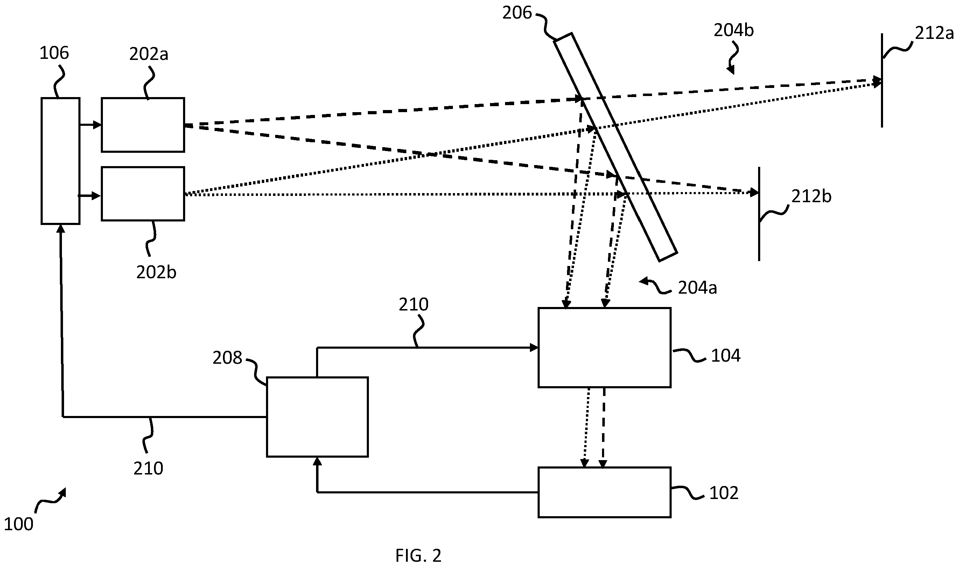

FIG 1 schematically illustrates an example of an apparatus 100. FIG 2 schematically illustrates features of the apparatus 100. Features not illustrated in FIG 1 are illustrated in FIG 2.

The apparatus 100 comprises a detector 102 for detecting light output from a plurality of scanning lasers 202. In examples, the apparatus 100 comprises the plurality of scanning lasers 202.

In examples, the plurality of scanning lasers 202 are configured to perform sensing, mapping, composition analysis or ranging tasks or a combination of such tasks.

In examples, a scanning laser is a laser that may perform a scanning operation. In some examples, at least one of the plurality of scanning lasers 202 is configured to perform a scanning operation while any one or more of the detector 102, the means 104 for controlling respective lengths of light paths from the plurality of scanning lasers 202 to the detector 102, and the means 106 for adjusting at least one light path orientation is operating. In some examples, at least one of the plurality of scanning lasers 202 is configured to not perform a scanning operation while any one or more of the detector 102, the means 104 for controlling respective lengths of light paths from the plurality of scanning lasers 202 to the detector 102, and the means 106 for adjusting at least one light path orientation is operating. Thus, the scanning lasers 202 may also be referred to as scannable lasers 202.

FIG 2 illustrates an example apparatus 100 in which two lasers 202 are emitting light. FIG 2 illustrates both the first time and the second time.

In examples, the first time is a first period of time and the second time is a second period of time. In examples, the first time and the second time are consecutive, that is there is no time or period of time between the first time and the second time. In other examples, the first time and the second time are non-consecutive, that is the first time and the second time are separated by a further time or period of time.

In examples, the first time is a time during which the respective path lengths are the first lengths, and the second time is a time during which the respective path lengths are second lengths. In some such examples, the first time is any time during which the respective path lengths are the first lengths, and the second time is any time during which the respective path lengths are second lengths. Thus, in examples, there may be multiple occurrences of the first time and/or the second time.

In the example of FIG 2, light output from a first laser 202a at the first time and at the second time is illustrated with dashed lines and light output from a second laser 202b at the first time and at the second time is illustrated with dotted lines. For ease of viewing, only two lasers 202 are illustrated in FIG 2. However, it is to be appreciated that the below may be applied to examples of the apparatus 100 in which more than two lasers 202 emit light.

In some examples, a first portion 204a of light emitted by one or more lasers 202 of the plurality of scanning lasers 202 is directed towards the detector 102. A second portion 204b of the light emitted by the one or more lasers 202 of the plurality of scanning lasers 202 is not directed towards the detector 102.

In examples, the apparatus 100 comprises an optical arrangement 206 configured to direct the first portion 204a of the light emitted by the plurality of scanning lasers 202 towards the detector 102. In examples, the optical arrangement 206 comprises any of: a beam splitter; a fiber coupler; or a dichroic mirror.

In examples, the optical arrangement comprises means for controlling at least one of: an intensity or a position at which the light is incident on an object plane 212.

In examples, the detector 102 has a fixed position relative to the apparatus 100. In some such examples, the detector 102 is fixed inside the apparatus 100.

The detector 102 is configured to determine one or more locations of incidence of the one or more lasers 202, wherein a location of incidence of a laser is a position at which light from the laser is incident on the detector 102. A location of incidence of a laser i may be represented as $X_i$.

In examples, the detector 102 is configured to detect coincidence of light output from the plurality of scanning lasers 202. Determination of coincidence of light output from the plurality of scanning lasers 202 may be at a first time, a second time, or one or more further times, the further times being any of: before the first time and the second time; between the first time and the second time; or after the first time and the second time. The detector 102 is therefore configured to determine coincidence when the respective lengths of the light paths are the first lengths and when the respective lengths of the light paths are the second lengths.

In examples, the apparatus 100 comprises means 208 for determining one or more control signals 210. The one or more control signals 210 are determined based on the locations of incidence of one or more lasers 202 of the plurality of lasers 202.

In examples, the apparatus 100 comprises means for outputting the one or more control signals 210.

In examples, simultaneously detecting light output from the plurality of scanning lasers 202 comprises detecting the light output from different scanning lasers 202 at an instantaneous time or within a time period shorter than a threshold time.

In the examples of FIGs 3A - 3B, 4A - 4B, 5A - 5F and 11, light output from the first laser 202a at the first time and at the second time is illustrated with solid lines and light output from the second laser 202b at the first time and at the second time is illustrated with dotted lines.

FIGs 3A and 3B illustrate examples in which the detector 102 comprises a position-based sensor, for example a position-sensitive detector or camera.

In some such examples, determination of coincidence of the light output from the plurality of scanning lasers 202 is based on a determination that a location of incidence of a first scanning laser of the plurality of scanning lasers 202 is the same as a location of incidence of a second scanning laser and/or a location of incidence of further lasers 202 of the plurality of scanning lasers 202. In other examples, determination of coincidence of the light output from the plurality of scanning lasers 202 is based on a determination that a distance between the location of incidence of the first scanning laser and the location of incidence of the second scanning laser and/or the location of incidence of the further scanning lasers 202 is less than a threshold distance.

In the example of FIG 3A, the location of incidence of the first laser 202a is not the same as the location of incidence of the second laser 202b and therefore there is not coincidence of the light output from the first laser 202a and the light output from the second laser 202b ($X_1 \neq X_2$). In the example of FIG 3B, the location of incidence of the first laser 202a is the same as the location of incidence of the second laser 202b or is less than a threshold distance from the location of incidence of the second laser 202b and therefore there is coincidence of the light output from the first laser 202a and the light output from the second laser 202b ($X_1 = X_2$).

FIGs 3C and 3D illustrate examples in which the detector 102 is a light intensity sensor or a light level sensor 302. In some such examples, the one or more positions at which the light from the one or more lasers 202 is incident on the detector 102 is determined from an intensity of light detected at the detector 102.

In some such examples, determination of coincidence of the light output from the plurality of scanning lasers 202 is based on a determination that an intensity of light at a first position on the detector 102 is above a threshold intensity. In examples, the threshold intensity is dependent on the number of beams to be brought to coincidence on the detector 102.

In the example of FIG 3C, the intensity of light detected at a first position is below a threshold and therefore there is not coincidence of the light output from the first laser 202a and the light output from the second laser 202b ($X_1 \neq X_2$). In the example of FIG 3D, the intensity of light at the first position is above the threshold and therefore there is coincidence of the light output from the first laser 202a and the light output from the second laser 202b ($X_1 = X_2$).

The apparatus 100 comprises means 104 for controlling respective lengths of light paths from the plurality of scanning lasers 202 to the detector 102. In examples, the optical arrangement 206 is configured to direct the first portion 204a of the light emitted by the scanning lasers 202 towards the means 104 for controlling respective lengths of light paths from the plurality of scanning lasers 202 to the detector 102.

The means 104 for controlling the respective lengths of the light paths from the plurality of scanning lasers 202 to the detector 102 can be considered to apply a function F to the light output from the plurality of i lasers 202. F comprises the analytic transfer function component M which is dependent on the orientation of the incident light relative to the light guide orientation, j, and can thus be represented as:

$$F = M(j)$$

In examples, the means 104 for controlling respective lengths of light paths from the plurality of scanning lasers 202 to the detector 102 are configured to receive the one or more control signals 210.

In examples, the means 104 for controlling the respective lengths of the light paths comprise a light guide configured for the variation of optical path length. In some such examples, the light guide is configured for rectilinear light input and rectilinear light output.

In examples, such as the example illustrated in FIG 2, the light guide is configured to receive at least a portion of the light emitted by the plurality of lasers 202. The light travels through the light guide, exits the light guide, and is received by the detector 102.

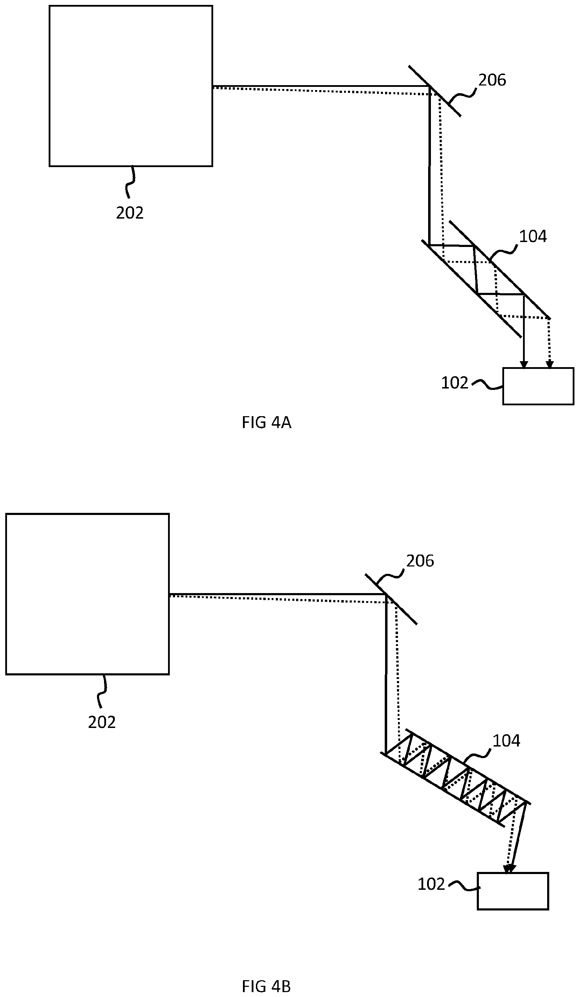

In examples, controlling the respective lengths of the light paths comprises changing the orientation of the light guide. FIGs 4A and 4B illustrate some such examples. In examples, the orientation of the light guide is changed by rotating the light guide about a transverse axis T, the transverse axis T extending perpendicular to a cross-section of the light guide. In some examples, changing the orientation of the light guide comprises rotating the light guide to change an angle of incidence of the light output from the plurality of scanning lasers 202 on the light guide. In some such examples, the one or more control signals 210 may cause rotation of the light guide about the transverse axis T. The angle of rotation of the light guide about the transverse axis T may be represented as $\theta$.

As shown in FIGs 4A and 4B, changing the angle of incidence of the light output from the plurality of scanning lasers 202 on the light guide changes the angle of reflection of the light output from the plurality of scanning lasers 202 within the light guide. A low angle of incidence causes a low angle of reflection, which in turn causes few internal reflections of the light output from the plurality of scanning lasers 202 as it travels through the light guide. Conversely, a high angle of incidence causes a high angle of reflection, which in turn causes more internal reflections of the light output from the plurality of scanning lasers 202 as it travels through the light guide.

Therefore, rotating the light guide such that the angle of incidence of the light output from the plurality of scanning lasers 202 increases causes an increase in the respective lengths of the light paths, and rotating the light guide such that the angle of incidence of the light output from the plurality of scanning lasers 202 decreases causes a decrease in the respective lengths of the light paths.

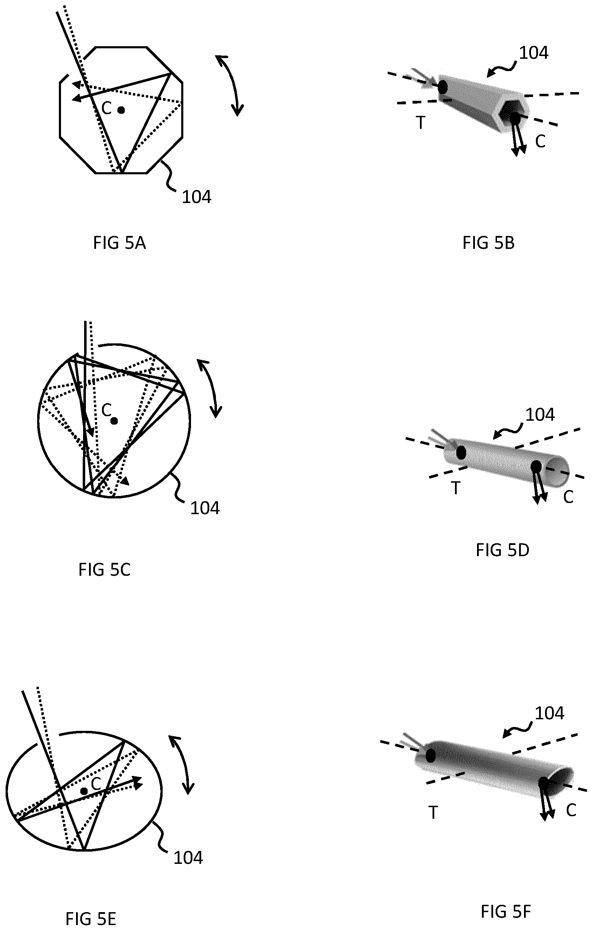

In examples, such as the examples illustrated in FIGs 5A - 5F, the light guide comprises an elongate hollow prism. In some examples, one or more interior faces of the light guide are reflective. In the examples of FIGs 5A - 5B, the cross-sectional shape of the light guide is a polygon with three or more sides. In the examples of FIGs 5C - 5F, the light guide has a circular or elliptical cross-section.

In examples, the angles of incidence of the lasers 202 are controllable by rotating the light guide about a central axis C. In examples, the central axis C is an axis of rotational symmetry of the light guide. In examples, the central axis C is perpendicular to the transverse axis T.

Rotation of the light guide about the central axis C causes the light emitted by the plurality of lasers 202 to enter the light guide at a different angle at the entrance, causing a different pattern of internal reflection of the light as it moves through the light guide, thus resulting in a different path length through the light guide, and a different angle at the exit, as can be seen in FIGs 5A, 5C and 5E. Therefore, by rotating the light guide about the central axis C and the transverse axis T, the locations of incidence of the plurality of lasers 202 on the detector 102 may be changed. The angle of rotation of the light guide about the central axis C is $\varphi$ and the transverse axis is $\theta$.

Thus, any point 213 in a 3D space on which the light output 204b from the plurality of lasers 202 may be incident can be represented by a unique orientation of the light guide in a parameter space defined by $(\theta, \varphi)$, corresponding to the 2D orientation of the light guide. Thus, the light path orientation j is defined by the parameters $(\theta, \varphi)$.

In examples, the means 104 for controlling the respective lengths of the light paths are configured to receive the control signal. In some such examples, the one or more control signals 210 may cause rotation of the light guide about the central axis C and/or about the transverse axis T.

In examples, rotation of the light guide about the central axis C is controlled by one or more motors. In examples, rotation of the light guide about the transverse axis T is controlled by one or more motors.

The means 104 for controlling the respective lengths of the light paths are configured to control the respective lengths of the light paths such that the respective lengths of the light paths are first lengths at the first time and second lengths, different to the first lengths, at the second time.

In examples, the first lengths are a first set of lengths of the light paths and the second lengths are a second set of lengths of the light paths. For example, a light path of light output from the first laser 202a may have a first length a, a light path of light output from the second laser 202b may have a length b, and light paths of light output from n further lasers 202 may have lengths c... n. In some examples, the length a, the length b and the lengths c... n are different. In other examples, one or more of the length a, the length b and the lengths c... n is equal or substantially equal to another one or more of the length a, the length b and the lengths c... n.

The apparatus 100 comprises means 106 for adjusting at least one light path orientation to obtain coincidence of the light output from the plurality of scanning lasers 202 at the detector 102 at the first time and the second time. In other words, the apparatus 100 comprises means 106 for adjusting at least one light path orientation to obtain coincidence of the light output from the plurality of scanning lasers 202 at the detector 102 when the respective lengths of the light paths are the first lengths and when the respective lengths of the light paths are the second lengths.

A light path orientation may be represented as *j* and an orientation vector of a laser i having a light path orientation *j* may be represented as S^. Therefore, the location of incidence of a laser *i on* detector 102, having a light path orientation *j,* may be represented as:

$$X_{ij} = S_i^j F = S_i^j M(j)$$

In examples, the means 106 for adjusting at least one light path orientation are configured to receive the one or more control signals 210.

In examples, the means 106 for adjusting the at least one light path orientation are configured to obtain coincidence, at the detector 102, between the light output from the first laser 202a and the light output from the second laser 202b. In some such examples, the means 106 for adjusting the at least one light path orientation are configured to obtain coincidence, at the detector 102, between the light output from the first laser 202a and light output from a further laser, based at least in part on a determination that coincidence between the first laser 202a and the second laser 202b has been obtained. The light output from the plurality of lasers 202 is therefore brought to coincidence one laser at a time.

In examples, the means 106 for adjusting the at least one light path orientation comprise means 106 for adjusting an orientation of at least one laser of the plurality of scanning lasers 202. In some such examples, the orientation is adjusted by one or more motors. Control of the one or more motors is dependent on the one or more control signals 210.

In some examples, the means 106 for adjusting the at least one light path orientation comprise means for redirecting the at least one light path. In some such examples, the means for redirecting the at least one light path comprise a mirror. A change in orientation of the mirror changes the orientation of the at least one light path. In examples, the orientation of the mirror is adjusted by one or more motors. The one or more motors are adjusted based on the one or more control signals 210.

By obtaining coincidence of the first portion 204a of the light output from the plurality of scanning lasers 202 at a first point on the detector 102 at the first time, coincidence of the second portion 204b of the light output from the plurality of scanning lasers 202 is obtained at a point corresponding to the first point on a first object plane 212a, the first object plane 212a defined by path lengths equal to the first lengths. By obtaining coincidence of the first portion 204a of the light output from the plurality of scanning lasers 202 at a second point on the detector 102 at the second time, coincidence of the second portion 204b of the light output from the plurality of scanning lasers 202 is obtained at a point corresponding to the second point on a second object plane 212b, the second object plane 212b defined by path lengths equal to the second lengths. Thus, changing the lengths of the respective light paths causes a corresponding change in the path lengths.

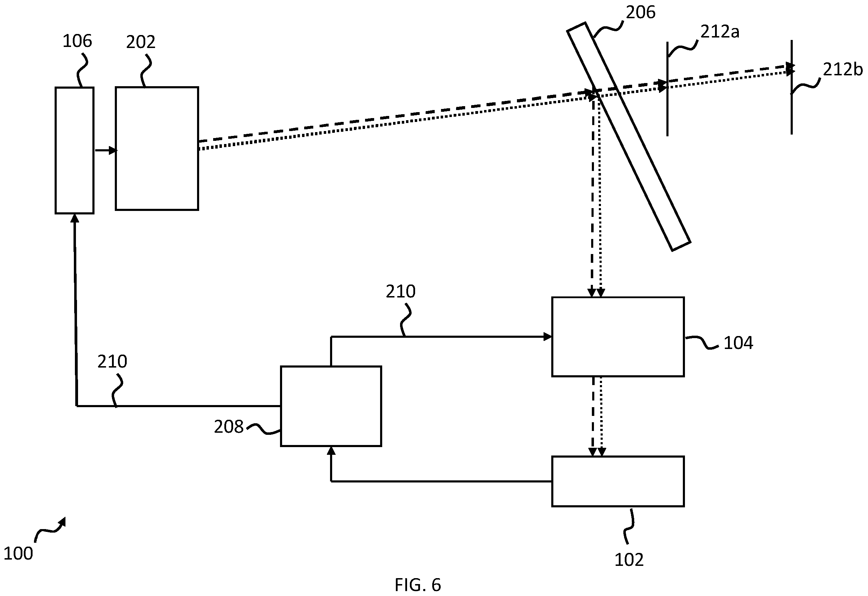

FIG 6 illustrates an example in which the light output from a subset of the plurality of scanning lasers 202 is emitted from a shared aperture at the first time and at the second time. For ease of viewing, collinear light beams are shown as adjacent lines in FIG 6.

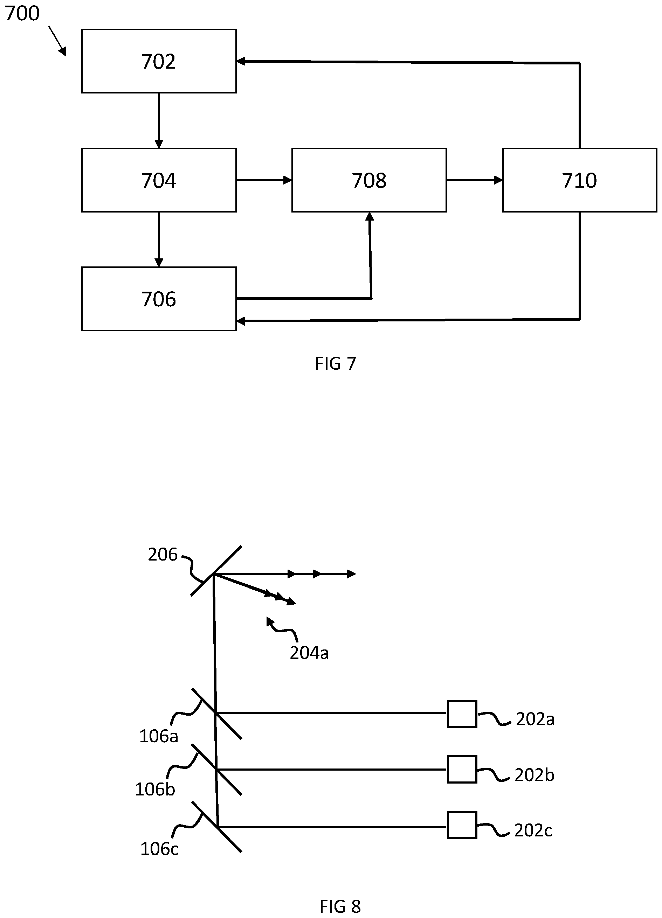

FIG 7 illustrates an example method 700 of obtaining coincidence of the light output from the plurality of scanning lasers 202 at the detector 102 at the first time and at the second time in examples in which the light output from the subset of the plurality of scanning lasers 202 is emitted from the shared aperture at the first time and at the second time.

In examples in which the light output from the subset of the plurality of scanning lasers 202 is emitted from the shared aperture, obtaining coincidence of the light output from the plurality of scanning lasers 202 at the first time and at the second time causes coincidence of the second portion 204b of the light output from the plurality of scanning lasers 202 at any path length 212. This is because obtaining coincidence of the first portion 204a of the light output from the plurality of scanning lasers 202 at a first point on the detector 102 at the first time, coincidence of the second portion 204b of the light output from the plurality of scanning lasers 202 is obtained at a point corresponding to the first point on a first object plane 212a, the first object plane 212a defined by path lengths equal to the first lengths. By obtaining coincidence of the first portion 204a of the light output from the plurality of scanning lasers 202 at a second point on the detector 102 at the second time, coincidence of the second portion 204b of the light output from the plurality of scanning lasers 202 is obtained at a point corresponding to the second point on a second object plane 212b, the second object plane 212b defined by path lengths equal to the second lengths. Thus, coincidence of the second portion 204b of the light output from the plurality of scanning lasers 202 is obtained at two points, each with a different path length 212. Two lines that go through the same two points must be collinear. Thus, the light output from the plurality of scanning lasers 202 is aligned.

At block 702, the method 700 comprises determining locations of incidence of the plurality of scanning lasers 202.

In examples, the locations of incidence of the plurality of scanning lasers 202 are determined by the detector 102.

For the below example, the location of incidence of a first laser 202a is $X_1$ and the location of incidence of a second laser 202b is $X_2$.

$X_1$ and $X_2$ are dependent on respective orientation vectors $S_1$, $S_2$ of the first laser 202a and the second laser 202b and a function $F^1$, corresponding to the 2D orientation of the light guide at the first time. Therefore:

$$S_1 F^1 = X_1$$

$$S_2 F^1 = X_2$$

At block 704, the method 700 comprises determining if the light output from the first laser 202a and the light output from the second laser 202b are coincident, at the first time, at the detector 102 ($X_1 = X_2$).

In dependence upon a determination that the light output from the first laser 202a and the light output from the second laser 202b are not coincident, at the first time, at the detector 102 ($X_1 \neq X_2$), the method 700 proceeds to block 706.

At block 706, the method 700 comprises adjusting a light path orientation of light from the second laser 202b to obtain coincidence, at the first time or at the second time, of the light output from the first laser 202a and the light output from the second laser 202b at the detector 102.

At block 706, $S_2$ is therefore adjusted to produce $S'_2$ such that:

$$S'_2 F^1 = X'_2 = X_1$$

Upon completion of block 706, the method 700 proceeds to block 708.

In dependence upon a determination that the light output from the first laser 202a and the light output from the second laser 202b are coincident, at the first time, at the detector 102 ($X_1 = X_2$), the method 700 proceeds to block 708.

At block 708, the method 700 comprises adjusting the respective lengths of the light paths such that the respective lengths of the light paths are second lengths, different to the first lengths, at the second time.

At block 708, the transfer function is therefore changed to $F^2$ corresponding to a 2D orientation of the light guide at the second time which changes the optical path length of both beams, such that:

$$S_1 F^2 = X_3$$

$$S'_2 F^2 = X_4$$

Upon completion of block 708, the method 700 proceeds to block 710.

At block 710, the method 700 comprises determining if the light output from the first laser 202a is coincident, at the second time, with the light output from the second laser 202b at the detector 102 ($X_3 = X_4$).

In dependence upon a determination that the light output from the first laser 202a and the light output from the second laser 202b are not coincident, at the second time, at the detector 102 ($X_3 \neq X_4$), the method 700 proceeds to block 706, considering the second time to be the first time.

In dependence upon a determination that the light output from the first laser 202a and the light output from the second laser 202b are coincident, at the second time, at the detector 102 ($X_3 = X_4$), the method 700 is complete for the second laser 202b.

The method 700 then proceeds back to block 702, replacing the second laser 202b with a further laser of the plurality of lasers 202.

When the method 700 has been completed for all lasers 202 of the plurality of lasers 202, the plurality of lasers 202 are aligned.

FIG 8 illustrates an example in which three lasers 202 have been aligned according to method 700. In the example of FIG 8, the means 106 for adjusting at least one light path orientation comprise optics 106a, 106b and 106c, configured to adjust a light path orientation of light output from lasers 202a, 202b and 202c respectively. The means 106 for adjusting at least one light path orientation redirect the light output from the lasers 202a, 202b and 202c such that the light output from the plurality of lasers 202a, 202b and 202c is emitted from a shared aperture. In other examples, the means 106 for adjusting at least one light path orientation comprise means for adjusting at least one laser orientation. In some such examples, no optics are present and the lasers are positioned such that the light output from the lasers is emitted from a shared aperture.

In examples, the apparatus 100 comprises means for performing the method 700.

In examples, the apparatus 100 comprises means for determining if the light output from the first laser 202a and the light output from the second laser 202b are coincident, at the first time, at the detector 102.

In examples, the apparatus 100 comprises means for, in dependence upon a determination that the light output from the first laser 202a is not coincident, at the first time, with the light output from the second laser 202b at the detector 102, adjusting a light path orientation of light from the second laser 202b to obtain coincidence, at the first time, of the light output from the first laser 202a and the second laser 202b at the detector 102.

In examples, the apparatus 100 comprises means for, in dependence upon a determination that the light output from the first laser 202a is coincident, at the first time, with the light output from the second laser 202b at the detector 102, determining if the light output from the first laser 202a is coincident, at the second time, with the light output from the second laser 202b at the detector 102.

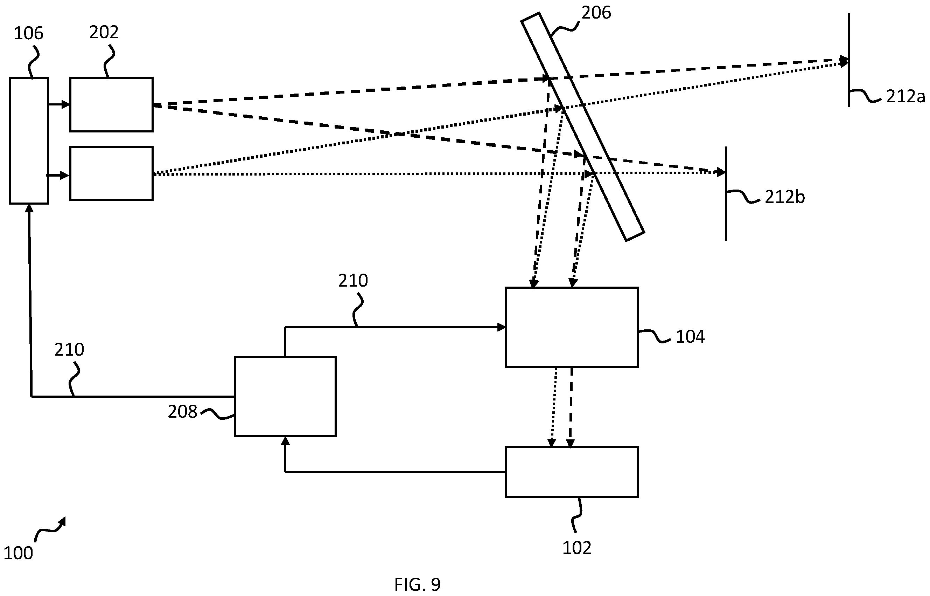

FIG 9 illustrates an example in which the light output from a subset of the plurality of scanning lasers 202 is emitted from a plurality of apertures.

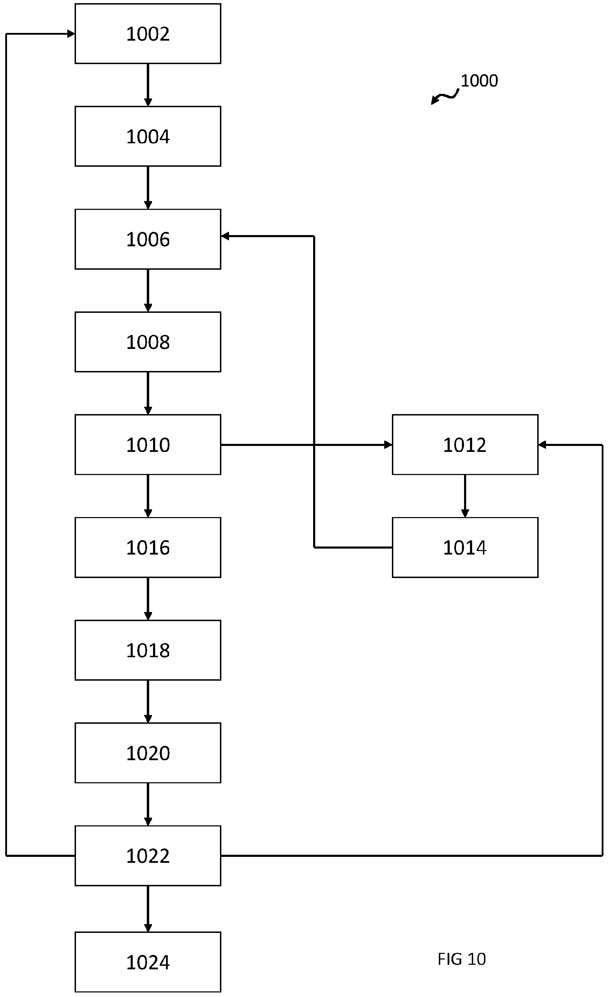

FIG 10 illustrates an example method 1000 of obtaining coincidence of the light output from the plurality of scanning lasers 202 at the detector 102 at the first time and at the second time in examples in which the light output from the subset of the plurality of scanning lasers 202 is emitted from a plurality of apertures. In examples, the method 1000 comprises obtaining and validating an analytic transfer function in examples in which the light output from the subset of the plurality of scanning lasers 202 is emitted from the plurality of apertures.

At block 1002, the method 1000 comprises determining locations of incidence of the plurality of scanning lasers 202. The locations of incidence of the plurality of scanning lasers 202 are plotted as a first array.

In examples, the locations of incidence of the plurality of scanning lasers 202 are determined by the detector 102.

For the below example, the location of incidence of a laser i at an orientation $j$ is $X_{ij}$. $X_{ij}$ is dependent on the orientation vectors $S_i^j$ of the respective lasers 202 and a function F of the light guide, wherein F comprises an analytic transfer function M, constructed using a plurality of orientations $j$.

Therefore, for a plurality of lasers 202 i at a plurality of orientations $j$, an i $\times$ j lookup map of locations of incidence X is obtained, wherein $j$ is an integer that increases in value every time block 1012 of the method 1000 is carried out:

$$\begin{pmatrix} S_1^1 M(1) = X_{11} \\ \vdots \\ S_1^j M(j) = X_{1j} \\ \vdots \\ S_i^j M(j) = X_{ij} \end{pmatrix}$$

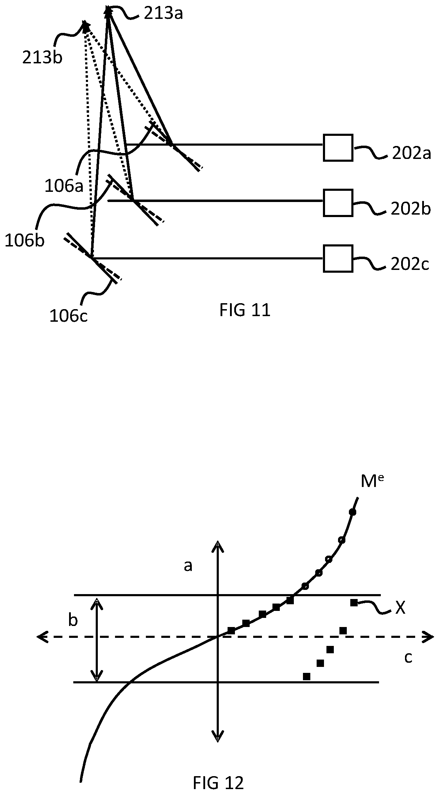

FIG 12 illustrates a plot of the i $\times$ j lookup map of locations of incidence X. In the example of FIG 12, axis a indicates detector position and axis c indicates angle of incidence of the light output from the plurality of scanning lasers on the light guide. b indicates the size of the detector.

An area on the detector on which the light output from the plurality of scanning lasers 202 may be incident is determined by the sensor area of the detector 102. In examples, locations of incidence may therefore be virtually mapped to locations of incidence outside this area on the detector in which the light output from the plurality of scanning lasers 202 may be incident on the detector 102 in order to produce a set of points to which a polynomial may be fitted. In examples, the virtual mapping of locations of incidence is an estimated mapping. In FIG 12, locations of incidence are represented by squares with black outline and black fill and virtually mapped locations of incidence are represented by ellipses with black outline and no fill.

The i $\times$ j lookup map is a many-to-one map because different beam orientations may result in the same location of incidence $X_{ij}$.

At block 1004, the method 1000 comprises determining a polynomial analytic transfer function to fit the plot of the i $\times$ j lookup map of locations of incidence X. FIG 12 illustrates an example polynomial analytic transfer function $M^e$ that fits the plotted i $\times$ j lookup map of locations of incidence X.

Thus, at block 1004, the method 1000 comprises estimating M. The determined polynomial analytic transfer function may therefore be referred to as $M^e$.

Below, other estimated values are indicated by the superscript $^e$.

At blocks 1006 - 1010, the method 1000 comprises validating the analytic transfer function $M^e$ at the first time, comprising estimating, using the analytic transfer function, a required light path orientation of the light output from the first laser 202a to obtain a desired location of incidence at the first time. The analytic transfer function at the first time may be represented as $M_1$.

At block 1006, the j1-th light path orientation of the first laser, $S_1^{j1}$ is estimated from the below equation, wherein $X_{1j1}$ is a desired location of incidence of the first laser 202a and $M_1^e$ is the determined analytic transfer function:

$$S_1^{j1^e} M_1^e(j1) = X_{1j1}$$

At block 1008, the method 1000 comprises adjusting the light path orientation of the light output from the first laser 202a to the j1-th light path orientation $S_1^{j1}$.

The light path orientation is therefore adjusted so that an estimated location of incidence for the first laser 202a at the j1-th light path orientation is obtained:

$$S_1^{j1^e} M_1^e(j1) = X_{1j1}^e$$

At block 1010, the method 1000 comprises determining validity of the determined analytic transfer function, comprising determining if the estimated location of incidence is accurate at the first time ($X_{1j1}^e = X_{1j1}$).

In dependence upon a determination that the estimated location of incidence is not accurate at the first time ($X_{1j1}^e \neq X_{1j1}$), the method 1000 proceeds to block 1012.

At blocks 1012 - 1014, the method 1000 comprises updating the analytic transfer function $M^e$.

At block 1012, the method 1000 comprises creating a second array of locations of incidence X using a plurality of beams i at a plurality of orientations $j$, increasing the value of $j$ from its previous value. In examples, increasing the value of $j$ from its previous value comprises incrementing the value of $j$ by 1. In other examples, increasing the value of $j$ from its previous value comprises increasing the value of $j$ by more than 1.

At block 1014, the method 1000 comprises determining a polynomial analytic transfer function to fit the second array. Block 1014 is performed in the same way as block 1004.

Upon completion of block 1014, the method 1000 proceeds to block 1006.

In dependence upon a determination that the estimated location of incidence is accurate at the first time ($X_{1j1}^e = X_{1j1}$), the method 1000 proceeds to block 1016.

At block 1016, the method 1000 comprises adjusting the respective lengths of the light paths such that the respective lengths of the light paths are second lengths, different to the first lengths, at the second time.

An analytic transfer function at the second time may be represented as $M_2$. Block 1016 therefore changes the function of the light guide to $Fz=Mz(j1)$, which changes the optical path length of the light emitted by the plurality of lasers 202 such that:

$$S_1 M_2^e = X_2$$

Here, $X_2$ represents an updated, or second, location of incidence of a laser on the detector 102, in this example for the first laser 202a, as compared with $X_{1j1}$. Upon completion of block 1016, the method 1000 proceeds to block 1018.

At blocks 1018 - 1022, the method 1000 comprises validating the analytic transfer function at the second time, comprising estimating, using the analytic transfer function, a required light path orientation of the light output from the first laser 202a to obtain a desired location of incidence at the second time.

At block 1018 the j2-th light path orientation is estimated from the below equation, wherein $X_{1j2}$ is a desired location of incidence of the first laser 202a and $M_2^e$ is the determined analytic transfer function:

$$S_1^{j2^e} M_2^e(j2) = X_{1j2}$$

At block 1020, the method 1000 comprises adjusting the light path orientation of the light output from the first laser 202a to the j2-thlight path orientation $S_1^{j2}$.

The light path orientation is therefore adjusted so that an estimated location of incidence for the first laser 202a at the j2-th light path orientation is obtained:

$$S_1^{j2e} M_2^e(j2) = X_{1j2}^e$$

At block 1022, the method 1000 comprises determining validity of the determined analytic transfer function, comprising determining if the estimated location of incidence is accurate at the second time ($X_{1j2}^e = X_{1j2}$).

In dependence upon a determination that the estimated location of incidence is not accurate at the second time ($X_{1j2}^e \neq X_{1j2}$), the method 1000 proceeds to block 1012.

In dependence upon a determination that the estimated location of incidence is accurate at the second time ($X_{1j2}^e = X_{1j2}$), the method 1000 is complete for the first laser 202a. The method 1000 then proceeds back to block 1002, replacing the first laser 202a with a further laser of the plurality of lasers 202. Thus, an estimated analytic transfer function is obtained for each laser of the plurality of lasers 202 or of the subset of the plurality of lasers 202.

When the method blocks 1002 - 1022 have been completed for all lasers 202 of the plurality of lasers 202 or of a subset of the plurality of lasers 202, an estimated transfer function $M^e$ has been determined for each laser of the plurality of lasers 202 or of a subset of the plurality of lasers 202.

The estimated transfer functions $M^e$ may then be used to obtain coincidence of the light output from the plurality of lasers at a desired location of incidence $X_d$. The method thus moves to block 1024.

At block 1024, the method 1000 comprises determining if there is coincidence, at the detector 102, of the light output from the first laser 202a and the light output from the second laser 202b, comprising using the estimated analytic transfer functions to estimate required light path orientations for the first and second lasers 202a, 202b to obtain a further desired location of incidence $X_d$.

In examples, in dependence upon a determination that there is coincidence, at the detector 102, of the light output from the first laser 202a and the light output from the second laser 202b, at block 1024, the method proceeds to determine coincidence, at the detector 102, of the light output from the first laser 202a and another laser 202 of the plurality of lasers. This process is then repeated until coincidence of light output from the first laser 202a and all other lasers for which an estimated transfer function $M^e$ has been obtained is determined.

In examples, in dependence upon a determination that there is not coincidence, at the detector 102, of the light output from the first lasers 202a and the light output from the second laser 202b, the method 1000 is restarted to obtain new transfer functions $M^e$.

The estimated analytic transfer functions for the respective lasers 202 of the plurality of lasers 202 may be used to determine light path orientations required in order to obtain a desired location of incidence at a known light path length.

FIG 11 illustrates an example in which estimated transfer functions have been obtained and validated for 3 lasers 202a, 202b and 202c according to method 1000. Required light path orientations are thus determined for each of the lasers to obtain coincidence at points 213a, 213b. In the example of FIG 11, the means 106 for adjusting at least one light path orientation comprise optics 106a, 106b and 106c, configured to adjust a light path orientation of light output from lasers 202a, 202b and 202c respectively. In other examples, the means 106 for adjusting at least one light path orientation comprise means for adjusting at least one laser orientation. In some such examples, no optics are present.

In examples, the apparatus 100 comprises means for performing the method 1000.

In examples, the apparatus 100 comprises means for validating an analytic transfer function at the first time and at the second time, wherein validating the analytic transfer function comprises:

determining, using the analytic transfer function, a first light path orientation of the light output from the first laser such that, when the light output from the first laser has the first light path orientation at the first time, the light output from the first laser coincides at the detector 102 with the light output from the second laser;

adjusting the light path orientation of the light output from the first laser to the first light path orientation;

determining if there is coincidence, at the detector 102, of the light output from the first laser and the light output from the second laser at the first time;

determining, using the analytic transfer function, a second light path orientation of the light from the first laser such that, when the light output from the first laser has the second light path orientation at the second time, the light output from the first laser coincides at the detector 102 with the light output from the second laser;

adjusting the light path orientation of the light output from the first laser to the second light path orientation; and

determining if there is coincidence, at the detector 102, of the light output from the first laser and the light output from the second laser at the second time.

In examples, the apparatus 100 comprises means for determining the analytic transfer function, wherein determining the analytic transfer function comprises:

creating a first array of detector positions; and determining a polynomial analytic transfer function to fit the first array.

In examples, the means for determining the analytic transfer function are configured to update the analytic transfer function, based at least in part on a determination that there is not coincidence of the light from the first laser and the light from the second laser at either the first time or the second time.

In examples, updating the analytic transfer function comprises:

creating a second array of detector positions, the second array comprising more detector positions than the first array; and determining a polynomial analytic transfer function to fit the second array.

In examples, the light output from a first subset of the plurality of scanning lasers 202 is emitted from a shared aperture and the light output from a second subset of the plurality of scanning lasers 202 is emitted from one or more different apertures.

In some such examples, coincidence is obtained between the light output from the first subset of the plurality of scanning lasers 202, then coincidence is obtained between the light output from the first subset of the scanning lasers 202 and the second subset of the scanning lasers 202.

In examples, the apparatus 100 comprises a smart device such as a smartphone or smart glasses; a laser scanning projector; a head-up display; a robotic device; a drone; an industrial IoT device; or a medical device.

The apparatus 100 thus provides an on-device, integrated, real-time feedback alignment method. The method provides for closed-loop, continuous control of the plurality of lasers 202. This facilitates systematic alignment using an on-device alignment setup without the need for an off-device calibration target.

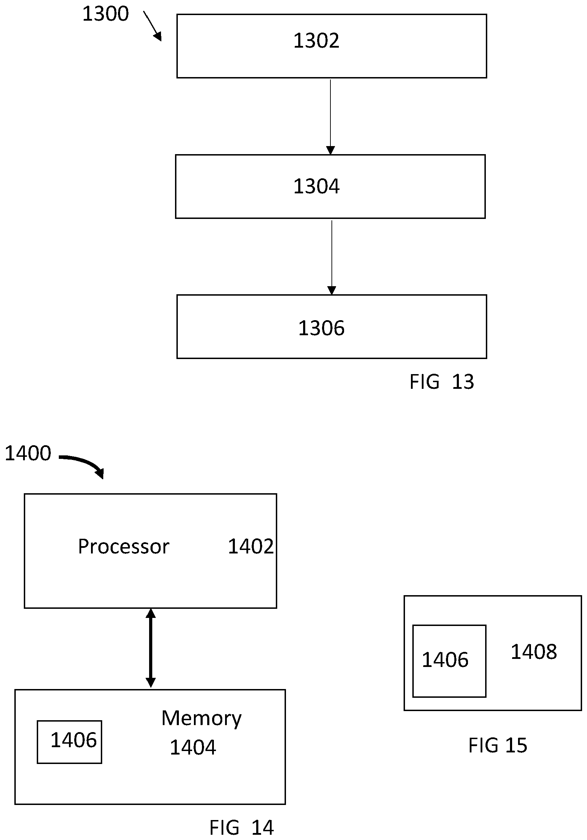

FIG 13 illustrates a method comprising:

at block 1302, detecting light output from a plurality of scanning lasers;

at block 1304, controlling respective lengths of light paths from the plurality of scanning lasers to the detector such that the respective lengths of the light paths are first lengths at a first time and second lengths, different to the first lengths, at a second time; and

at block 1306, adjusting at least one light path orientation to obtain coincidence of the light output from the plurality of scanning lasers at the detector at the first time and at the second time.

Fig 14 illustrates an example of a controller 1400 suitable for use in an apparatus 100. Implementation of a controller 1400 may be as controller circuitry. The controller 1400 may be implemented in hardware alone, have certain aspects in software including firmware alone or can be a combination of hardware and software (including firmware).

As illustrated in Fig 14 the controller 1400 may be implemented using instructions that enable hardware functionality, for example, by using executable instructions of a computer program 1406 in a general-purpose or special-purpose processor 1402 that may be stored on a computer readable storage medium (disk, memory etc) to be executed by such a processor 1402.

The processor 1402 is configured to read from and write to the memory 1404. The processor 1402 may also comprise an output interface via which data and/or commands are output by the processor 1402 and an input interface via which data and/or commands are input to the processor 1402.

The memory 1404 stores a computer program 1406 comprising computer program instructions (computer program code) that controls the operation of the apparatus 100 when loaded into the processor 1402. The computer program instructions, of the computer program 1406, provide the logic and routines that enables the apparatus to perform the methods illustrated in the ac-

companing Figs. The processor 1402 by reading the memory 1404 is able to load and execute the computer program 1406.

The apparatus 100 comprises:

at least one processor 1402; and
at least one memory 1404 including computer program code
the at least one memory 1404 and the computer program code configured to, with the at least one processor 1402, cause the apparatus 100 at least to perform:

detecting light output from a plurality of scanning lasers;
controlling respective lengths of light paths from the plurality of scanning lasers to the detector such that the respective lengths of the light paths are first lengths at a first time and second lengths, different to the first lengths, at a second time; and
adjusting at least one light path orientation to obtain coincidence of the light output from the plurality of scanning lasers at the detector at the first time and at the second time.

The apparatus 100 comprises:

at least one processor 1402; and
at least one memory 1404 storing instructions that, when executed by the at least one processor 1402, cause the apparatus at least to:
detect light output from a plurality of scanning lasers;
control respective lengths of light paths from the plurality of scanning lasers to the detector such that the respective lengths of the light paths are first lengths at a first time and second lengths, different to the first lengths, at a second time; and
adjust at least one light path orientation to obtain coincidence of the light output from the plurality of scanning lasers at the detector at the first time and at the second time.

As illustrated in Fig 15, the computer program 1406 may arrive at the apparatus 100 via any suitable delivery mechanism 1408. The delivery mechanism 1408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 1406. The delivery mechanism may be a signal configured to reliably transfer the computer program 1406. The apparatus 100 may propagate or transmit the computer program 1406 as a computer data signal.

Computer program instructions for causing an apparatus to perform at least the following or for performing at least the following:

detecting light output from a plurality of scanning lasers;
controlling respective lengths of light paths from the plurality of scanning lasers to the detector such that the respective lengths of the light paths are first lengths at a first time and second lengths, different to the first lengths, at a second time; and
adjusting at least one light path orientation to obtain coincidence of the light output from the plurality of scanning lasers at the detector at the first time and at the second time.

The computer program instructions may be comprised in a computer program, a non-transitory computer readable medium, a computer program product, a machine readable medium. In some but not necessarily all examples, the computer program instructions may be distributed over more than one computer program.

Although the memory 1404 is illustrated as a single component/circuitry it may be implemented as one or more separate components/circuitry some or all of which may be integrated/removable and/or may provide permanent/semi-permanent/ dynamic/cached storage.

Although the processor 1402 is illustrated as a single component/circuitry it may be implemented as one or more separate components/circuitry some or all of which may be integrated/removable. The processor 1402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory or memories that work together to cause an apparatus, such as a mobile phone or server, to perform various functions and

(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program [REF3]. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

The above-described examples find application as enabling components of:

automotive systems; telecommunication systems; electronic systems including consumer electronic products; distributed computing systems; media systems for generating or

rendering media content including audio, visual and audio visual content and mixed, mediated, virtual and/or augmented reality; personal systems including personal health systems or

personal fitness systems; navigation systems; user interfaces also known as human machine interfaces; networks including cellular, non-cellular, and optical networks; ad-hoc networks;

the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, "determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

**Claims**

1. An apparatus comprising:

   a detector for detecting light output from a plurality of scanning lasers;
   means for controlling respective lengths of light paths from the plurality of scanning lasers to the detector such that the respective lengths of the light paths are first lengths at a first time and second lengths, different to the first lengths, at a second time; and
   means for adjusting at least one light path orientation to obtain coincidence of the light output from the plurality of scanning lasers at the detector at the first time and at the second time.

2. An apparatus as claimed in claim 1, wherein the first time is a first period of time and wherein the second time is a second period of time.

3. An apparatus as claimed in any preceding claim, wherein the means for controlling the respective lengths of the light paths comprise a light guide configured for the variation of the respective lengths of light paths from the plurality of scanning lasers to the detector; and
   wherein the light guide is configured for rectilinear light input and rectilinear light output.

4. An apparatus as claimed in claim 3, wherein controlling the respective lengths of the light paths comprises changing the orientation of the light guide; and
   wherein changing the orientation of the light guide comprises rotating the light guide to change an angle of incidence of the light output from the plurality of scanning lasers on the light guide.

5. An apparatus as claimed in any preceding claim, wherein the detector has a fixed position relative to the apparatus; and
   wherein the apparatus comprises the plurality of scanning lasers.

**6.** An apparatus as claimed in any preceding claim, wherein the means for adjusting the at least one light path orientation are configured to obtain coincidence, at the detector, between light output from a first laser of the plurality of lasers and light output from a second laser of the plurality of lasers.

**7.** An apparatus as claimed in any preceding claim, wherein the light output from a subset of the plurality of scanning lasers is emitted from a shared aperture at the first time and at the second time.

**8.** An apparatus as claimed in any of claims 6 to 7, further comprising:

   means for determining if the light output from the first laser and the light output from the second laser are coincident, at the first time, at the detector; and
   means for, in dependence upon a determination that the light output from the first laser is not coincident, at the first time, with the light output from the second laser at the detector, adjusting a light path orientation of light from the second laser to obtain coincidence, at the first time, of the light output from the first laser and the second laser at the detector.

**9.** An apparatus as claimed in claim 8, comprising means for, in dependence upon a determination that the light output from the first laser is coincident, at the first time, with the light output from the second laser at the detector, determining if the light output from the first laser is coincident, at the second time, with the light output from the second laser at the detector.

**10.** An apparatus as claimed in any of claims 6 to 9, wherein light output from at least some of the plurality of scanning lasers is emitted from respective apertures.

**11.** An apparatus as claimed in claim 10, comprising means for validating an analytic transfer function at the first time and at the second time, wherein validating the analytic transfer function comprises:

   determining, using the analytic transfer function, a first light path orientation of the light output from the first laser such that, when the light output from the first laser has the first light path orientation at the first time, the light output from the first laser coincides at the detector with the light output from the second laser;
   adjusting the light path orientation of the light output from the first laser to the first light path orientation;
   determining if there is coincidence, at the detector, of the light output from the first laser and the light output from the second laser at the first time;
   determining, using the analytic transfer function, a second light path orientation of the light from the first laser such that, when the light output from the first laser has the second light path orientation at the second time, the light output from the first laser coincides at the detector with the light output from the second laser;
   adjusting the light path orientation of the light output from the first laser to the second light path orientation; and
   determining if there is coincidence, at the detector, of the light output from the first laser and the light output from the second laser at the second time.

**12.** An apparatus as claimed in claim 11, comprising means for determining the analytic transfer function, wherein determining the analytic transfer function comprises:

   creating a first array of detector positions; and
   determining a polynomial analytic transfer function to fit the first array.

**13.** An apparatus as claimed in claim 12, wherein the means for determining the analytic transfer function are configured to update the analytic transfer function, based at least in part on a determination that there is no coincidence of the light from the first laser and the light from the second laser at either the first time or the second time; and
   wherein updating the analytic transfer function comprises:

   creating a second array of detector positions, the second array comprising more detector positions than the first array; and
   determining a polynomial analytic transfer function to fit the second array.

**14.** A method comprising:

   detecting light output from a plurality of scanning lasers;
   controlling respective lengths of light paths from the plurality of scanning lasers to the detector such that the respective lengths of the light paths are first lengths at a first time and second lengths, different to the first lengths, at a second time; and
   adjusting at least one light path orientation to obtain coincidence of the light output from the plurality of scanning lasers at the detector at the first time and at the second time.

**15.** A computer program comprising program instructions for causing an apparatus to perform at least the following:

detecting light output from a plurality of scanning lasers;

controlling respective lengths of light paths from the plurality of scanning lasers to the detector such that the respective lengths of the light paths are first lengths at a first time and second lengths, different to the first lengths, at a second time; and

adjusting at least one light path orientation to obtain coincidence of the light output from the plurality of scanning lasers at the detector at the first time and at the second time.

FIG 1

FIG 3A      102

FIG 3B  102

302

102

FIG 3C

302

102

FIG 3D

FIG. 2

18

202

206

104

102

FIG 4A

202

206

104

102

FIG 4B

FIG 5A

FIG 5B

FIG 5C

FIG 5D

FIG 5E

FIG 5F

EP 4 546 030 A1

FIG. 6

700

702

704 → 708 → 710

706

FIG 7

206

204a

106a — 202a

106b — 202b

106c — 202c

FIG 8

FIG. 9

FIG 10

FIG 11

FIG 12

1300

1302

1304

1306

FIG 13

1400

Processor 1402

Memory
1406 1404

FIG 14

1406 1408

FIG 15

Europäisches
Patentamt

European
Patent Office

Office européen
des brevets

# EUROPEAN SEARCH REPORT

Application Number

EP 24 20 0733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/171031 A1 (GOREN NIR [IL] ET AL) 2 June 2022 (2022-06-02) | 1,2, 5-10,13, 14 | INV. G02B26/10 G02B27/10 |
| A | * paragraphs [0053], [0057], [0074] - [0077], [0191] - [0192]; figures 2c,3c * | 3,4 | G02B26/12 |
| | - - - - - | | ADD. |
| X | US 2007/153392 A1 (REYNOLDS MERITT [CA] ET AL) 5 July 2007 (2007-07-05) | 1-3, 5-12,14, 15 | G02B27/14 |
| A | * paragraphs [0003], [0004], [0029], [0030], [0042] - [0049]; figures 1,2b,5a,5b,6b,7a,7b * | 4 | |
| | - - - - - | | |
| X | US 2007/242329 A1 (BALLEGAARD HANS P [DK] ET AL) 18 October 2007 (2007-10-18) | 1,2, 5-10,14, 15 | |
| | * paragraphs [0065], [0109], [0116], [0121], [0153]; figures 1,11a,20 * | | |
| | - - - - - | | |

TECHNICAL FIELDS
SEARCHED     (IPC)

G02B

The present search report has been drawn up for all claims

| Place of search | Date of completion of the search | Examiner |
|---|---|---|
| Munich | 19 February 2025 | Blau, Gerd |

EPO FORM 1503 03.82 (P04C01)

## ANNEX TO THE EUROPEAN SEARCH REPORT
## ON EUROPEAN PATENT APPLICATION NO.

EP 24 20 0733

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2025

| Patent document cited in search report | | Publication date | Patent family member(s) | | Publication date |
|---|---|---|---|---|---|
| US 2022171031 | A1 | 02-06-2022 | CN | 115989427 A | 18-04-2023 |
| | | | EP | 4200633 A1 | 28-06-2023 |
| | | | US | 2022171031 A1 | 02-06-2022 |
| | | | US | 2023350026 A1 | 02-11-2023 |
| | | | WO | 2022043749 A1 | 03-03-2022 |
| US 2007153392 | A1 | 05-07-2007 | NONE | | |
| US 2007242329 | A1 | 18-10-2007 | EP | 1642163 A1 | 05-04-2006 |
| | | | US | 2007242329 A1 | 18-10-2007 |
| | | | WO | 2005012978 A1 | 10-02-2005 |

EPO FORM P0459

For more details about this annex : see Official Journal of the European Patent Office, No. 12/82